# EUROPEAN PATENT APPLICATION

(11) **EP 2 463 784 A1**
(43) Date of publication of application: **13.06.2012**
(21) Application number: 10194520.2
(22) Date of filing: 10.12.2010
(51) Int. Cl.: G06F 17/30

(54) **Method and human-to-machine interface apparatus for searching files**

(71) Applicant: Giga-Byte Technology Co., Ltd., Hsin Tien 231, Taipei County (TW)
(72) Inventor: Lin, Guei-Syuan, 231, Hsin Tien (TW); Chen, Wei-Ting, 231, Hsin Tien (TW)
(74) Representative: Schwerbrock, Florian

(57) **Abstract**

A method and human-to-machine interface apparatus for searching files are provided. The method is adapted for an electronic device and includes the following steps. First, a label or a plurality of labels is established according to a folder or a plurality of folders on a current file directory of each file. Next, a label list and all files are displayed on a displayer of the electronic device, where the label list includes all labels and a sum of all files corresponding to each label. Then, a label is selected by receiving a label select command. Further, according to the selected label, all files corresponding to the selected label and an updated label list are displayed, where the updated label list includes the labels of all displayed files and a sum of all files corresponding to each label.

## Description

### BACKGROUND OF THE INVENTION

### Field of the Invention

The invention relates to a method of searching files, and more particularly to a method of searching files and a human-to-machine interface apparatus of searching files in a data storage system with multi-level folder.

### Description of the Related Art

In current electronic devices such as personal computer, notebook computer, mobile phone, personal digital assistant mobile phone, or intelligent mobile phone, all comprise file management software. The file management software usually presents as a window mode, and each file can be searched according to each file attribute through the file management software, and the file attributes can be a file name, a folder name of current file directory, a latest updated date and a filename extension of file.

However, on the condition of a larger number of files (ex: more than 200 files) or folders (ex: more than 200 folders in a data storage system), a user may forget the above-mentioned file attributes which searching files. Probably, on the condition of appearing the duplicated attributes among the searched files, so the user needs to select each file one by one to further confirm the searched files. Although the file management software in most of electronic devices all have search function, but the fixed search method of the operating system of the electronic device or file management software is not certain adapt to each user's memory mode or operation habit.

Even thought the file management software of the electronic device provides a flexible search function, presently, for searching a plurality of files, it can only search them by features of folder or attributes of file. The user can not use the correlation image to a specific file in his or her memory to narrow the search field by using the pre-marked file label step by step. Therefore, the users still feel difficult or inconvenient when searching a large number of files or using more complex data storage system (ex: a large number of folders or multi-level folder structure).

### BRIEF SUMMARY OF THE INVENTION

According to an exemplary embodiment of the present invention, a method and a human-to-machine interface apparatus of searching files according to the present invention are provided to solve the problem of searching files, especially related to a large quantity of files or complex file storage system (a data storage system with multi-level folder). The user can establish a label or a plurality of labels according to a folder or a plurality of folders on a current file directory of each file to build a corresponding label database. Furthermore, by displaying the total number of the files corresponding to each label and the user's select command can narrow the file search field gradually. Accordingly, the users can search files more intuitively among a large number of files and find out the expected files more quickly and efficiently.

According to an exemplary embodiment of the present invention, a method of searching files according to the present invention is adapted for an electronic device and comprises the following steps. First, establish a label or a plurality of labels according to a folder or a plurality of folders on a current directory of each file. Then display the label list and all files on a displayer of the electronic device, and the label list comprises all labels and the amount of files corresponding to current each label. Then, receive a label select command to select a label. Furthermore, according to the selected label, display all files corresponding to the selected label and an updated label list on a displayer, wherein the updated label list comprises the labels of all files displayed at present and the amount of the files corresponding to each label.

According to an exemplary embodiment of the present invention, a method of searching files according to the present invention further comprises the following steps. First, store multiple files in a database, and each label represents a folder. Further, receive a file select command and display a folder of a file corresponding to the file select command.

According to an exemplary embodiment of the present invention, a method of searching files according to the present invention further comprises the following steps. First, store multiple files in a database, and each label represents a folder. Further, receive a file select command and display a file or a plurality of files corresponding to the file select command.

According to an exemplary embodiment of the present invention, a method of searching files according to the present invention further comprises displaying a selected label list on a displayer after receiving a label select command to select a label. The selected label list displays one or a plurality of selected labels in sequence and the amount of all files displayed nowadays corresponding to each selected label. Meanwhile, remove one or a plurality of the selected labels in the label list from the updated label list. Further, stop accepting any label select command when the updated label list doesn't have any label.

According to an exemplary embodiment of the present invention, a method of searching files according to the present invention is provided, and in the step of displaying a label list and all files on a displayer of an electronic device further comprises the following steps. First, display a file attribute of each file, and the file attribute comprises a filename extension, a latest updated date and an occupied memory space of files.

According to an exemplary embodiment of the present invention, a method of searching files according to the present invention is provided, when displaying all files with the selected labels and an updated label list on a displayer, the method of searching files further comprises the following steps. First, provid a function of expanding or collapsing the label lists to let a user can collapse or expand the updated label lists. Further, provide a function of expanding or collapsing the file list to let a user can collapse or expand the file list. The file list presents all files displayed nowadays.

According to an exemplary embodiment of the present invention, a method of searching files according to the present invention is provided, when displaying each file with the selected labels and an updated label list on a displayer, the method of searching files further comprises the following steps. First, provide a function of returning to the previous layer of the label lists to let a user's operation return to the label list before receiving the label select command. Further, provide a function of returning to the selected label list to let a user's operation return to the previously selected label lists before receiving the label select command.

According to an exemplary embodiment of the present invention, a method of searching files according to the present invention further comprises the following steps. First, establish (or create) one or a plurality of labels on a current file directory of each file. Further, display all files on a displayer and sort all files by file name of each file.

According to an exemplary embodiment of the present invention, a method of searching files according to the present invention further comprises the steps of marking a default (or pre-seted) file attribute on the filename extension of each file, and sorting multiple files with the same file name by the default file attribute when displaying all files on a displayer.

According to an exemplary embodiment of the present invention, a method of searching files according to the present invention is provided, wherein the electronic device is a displayer which coupled to a data storage system.

According to an exemplary embodiment of the present invention, a method of searching files according to the present invention, wherein the electronic device is selected from the group consisting of computer, multimedia player device, personal digital assistant, mobile phone, personal digital assistant mobile phone, intelligent mobile phone or portable navigation device.

According to an exemplary embodiment of the present invention, a human-to-machine interface apparatus of searching files according to the present invention is adapt for deploying to an electronic device. The human-to-machine interface apparatus comprises a database, a data creation module, a command input module, a data search module and a data display module. The database is for storing a plurality of files. The data creation module is for creating one or a plurality of labels according to one or a plurality of folders of current file directory of each file, wherein each label represents a folder. The command input module is for selecting a label by receiving a label select command. The data search module is for finding out all files with the selected label according to the selected label value. Further, the data display module is for displaying all labels and displaying a label list with an amount of all files corresponding to current each label and all files on a displayer of an electronic device, or for displaying each file with the selected label and an updated label list on a displayer. The updated label list comprises the labels of all files displayed nowadays, and an amount of all files corresponding to current each label.

According to an exemplary embodiment of the present invention, a human-to-machine interface apparatus of searching files according to the present invention, wherein the electronic device is a displayer which coupled to a data storage system.

According to an exemplary embodiment of the present invention, a human-to-machine interface apparatus of searching files according to the present invention, wherein the electronic device is selected from the group consisting of computer, multimedia player device, personal digital assistant, mobile phone, personal digital assistant mobile phone, intelligent mobile phone or portable navigation device.

A detailed description is given in the following embodiments with reference to the accompanying drawings.

### BRIEF DESCRIPTION OF THE DRAWINGS

The invention can be more fully understood by referring to the following detailed description and examples with references made to the accompanying drawings, wherein:
Fig. 1 is a system block diagram of an exemplary embodiment of a human-to-machine interface apparatus of searching files according to the invention.
Fig. 2 is a schematic diagram of an exemplary embodiment of a database of searching files according to the invention
Fig. 3A is a schematic diagram of an exemplary embodiment of a file interface of searching files according to the invention
Fig. 3B is a schematic diagram of an exemplary embodiment of a file interface of searching files according to the invention
Fig. 4 is a schematic diagram of an exemplary embodiment of a file interface of searching files according to the invention
Fig. 5 is a schematic diagram of an exemplary embodiment of a file interface of searching files according to the invention
Fig. 7 is a process flow diagram of an exemplary embodiment of a file interface of searching files according to the invention
Fig. 8 is a process flow diagram of an exemplary embodiment of a file interface of searching files according to the invention
Fig. 9 is a process flow diagram of an exemplary embodiment of a file interface of searching files according to the invention

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

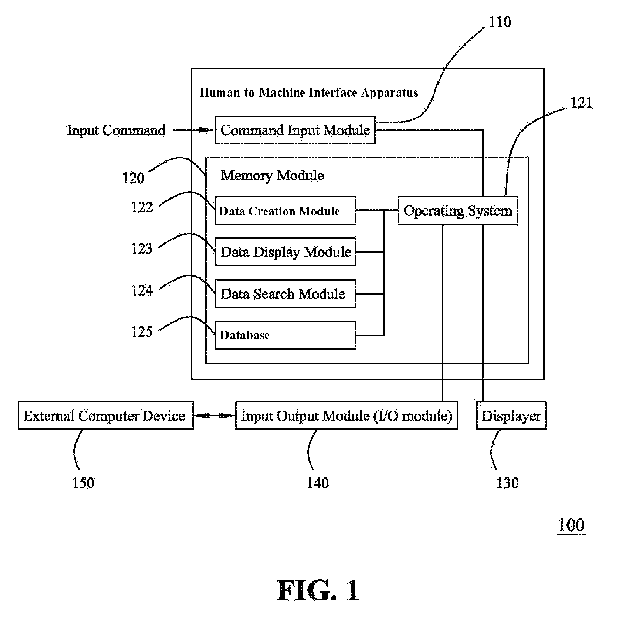

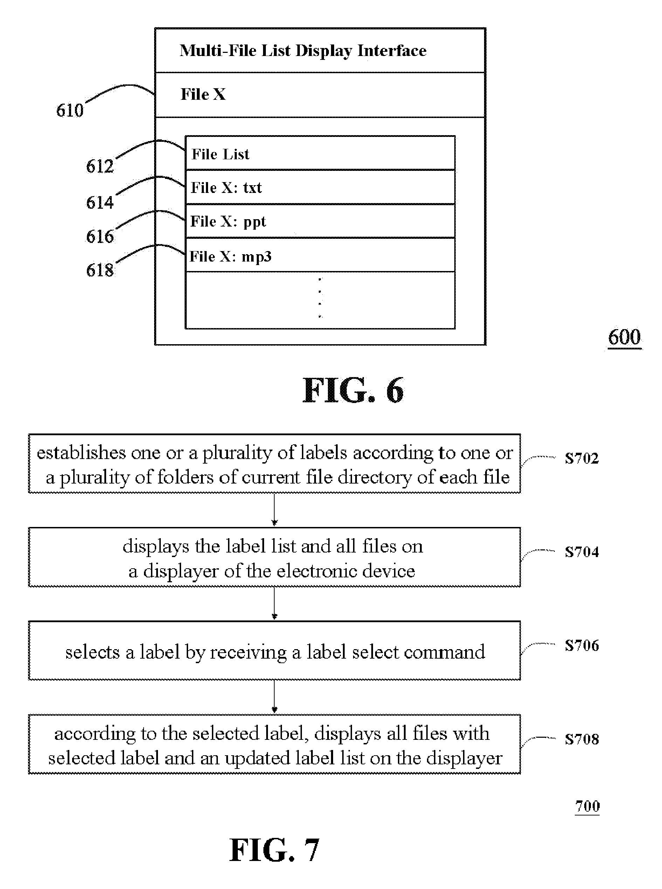

An exemplary embodiment of a human-to-machine interface apparatus of searching files and a method of searching file according to the present invention are provided. Please refer to Fig. 1 to Fig. 6 to illustrate the human-to-machine interface apparatus, and Fig. 7 to Fig. 9 to illustrate the method of searching files.

Fig. 1 is a system block diagram of an exemplary embodiment of a human-to-machine interface apparatus 100 of searching files according to the present invention. A human-to-machine interface apparatus 100 can deploy to an electronic device such as computer, multimedia player device, personal digital assistant, mobile phone, personal digital assistant mobile phone, intelligent mobile phone or portable navigation device. Referring to Fig. 1, in this exemplary embodiment the human-to-machine interface apparatus 100 comprise a command input module 110 and a memory module 120. The command input module 110 is coupled to the memory module 120 for receiving a user's input command. The memory module 120 is for storing operating system, data and software program.

Still referring to Fig. 1, the memory module 120 can comprise a read-only memory and a random access memory. The memory module 120 can store a program module, and the program module can generate one or a plurality of processes when a processor (not shown) of the electronic device is executing. Further, the memory module 120 are one or a plurality of memory devices for storing data and software program, and can be selected from the group consisting of one or more of the following: a random access memory, a magnetic storage apparatus, a FLASH memory storage or an optical storage apparatus. The processor can provide one or a plurality of configurations of processor to execute the program module. Further, the memory module 120 comprises an operating system 121, a data creation module 122, a data display module 123, a data search module 124 and a database 125. Moreover, the electronic device with the human-to-machine interface apparatus 100 comprises a displayer 130, which is coupled to the operating system 121 for displaying the picture of an operating system or a software program while executing.

Still referring to Fig. 1, the operating system 121 is coupled to the command input module 110 and the displayer 130 is for controlling the data creation module 122, the data display module 123, the data search module 124 and the database 125. The database 125 is for storing multiple files. The data creation module 122 is for creating one or a plurality of labels according to one or a plurality of folders of current file directory of each file, and the each label represents a folder. The command input module 110 further selects a label by receiving a label select command. The data search module 124 is for finding out all files with the selected label according to the selected label value. Furthermore, the data display module 123 is for displaying all labels, a label list and all files (or files name lists) on a displayer 130 of an electronic device. The label list comprises displaying the amount of all files corresponding to each label. Furthermore, the data display module 123 can also displays all files corresponding to the selected labels and an updated label list on the displayer 130. The updated label list can be updated from an original label list by updating the selected label corresponding to the label select command. The updated label list comprises the labels of all files displayed nowadays, and the amount of all files corresponding to current each label. The label list, each file and each label, all of them are accessed from a database 125 through a data display module 123.

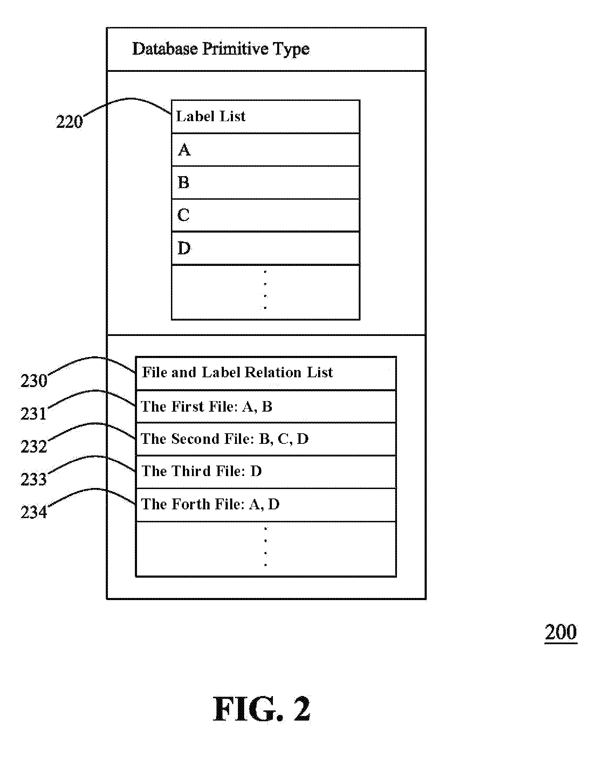

Fig. 2 is a schematic diagram of an exemplary embodiment of a database 200 of searching files according to the present invention. Referring to Fig. 2, the drawing of the database 200 show a kind of a primitive type database about all data of files is simply a schematic diagram. The database 200 can search files among all files in a data storage system of user management during a system pre-seted or a user self-defined cycle to establish the primitive type database. However, in the other exemplary embodiment according to the present invention, the data structure or the method of presentation of a database also can be adjusted according to the need of actual design; therefore, it will be different from the database primitive type shown in Fig. 2. Additionally, all general operating system nowadays, all of them have a record (storing in a specific database) of storing a file directory of each file, or a database of establishing a file directory of each file. Therefore, the database 200 can automatically create the primitive type database shown in Fig. 2 through searching the file directory of each file.

Still referring to Fig. 2, after the user creating multiple files by a data creation module 122 and the data creation module 122 automatically marking one or a plurality of labels on each file, all labels will be stored in a label list 220. As shown in Fig. 2, the label list 220 comprises label A, B, C and D. However, the example above-mentioned that may be useful in the present invention include, but are not limited to, the label list 220 also can comprises more or less than 4 labels, and each label corresponding to a user self-defined or system default folder. The label A, B, C and D are simply used as demonstrations, and they represent to name a folder according to the user operation needs or the user operation habit. In the present exemplary embodiment, the data creation module 122 will mark the root directory of each file (that is the first level folder of the current file directory of the file) as a default label, and mark each filename extension of each file as a default file attribute. When displaying all files on the displayer 130, the data display module 123 sort the multiple files with the same name through the default (or pre-seted) file attribute. Furthermore, in the other exemplary embodiment according to the present invention, when displaying all files on the displayer 130, the data display module 123 can sort all files by the file name of each file.

Furthermore, in the other exemplary embodiment according to the present invention, when displaying all files on the displayer 130, the data display module 123 can sort all files according to the first character of Chinese or the first letter of English of file name of each file. The first character of Chinese can be the first character of the file name, and the first letter of English can be the first letter of the file name. However, the example above-mentioned that may be useful in the present invention include, but are not limited to, the method of sorting files can be customized according to user needs, when displaying all files on the displayer 130.

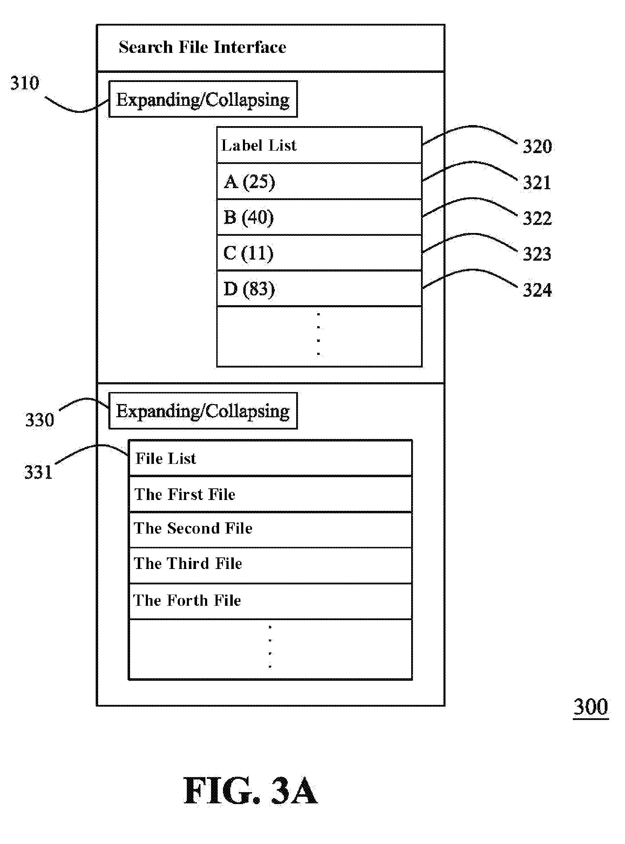

Still referring to Fig. 2, the database 200 also comprises a file and label relation list 230, and the file and label relation list 230 list the details of the labels corresponding to each file. For example, the relational item 231 comprises the first file and the corresponding label A and B; the relational item 232 comprises the second file and the corresponding label B, C and D; the relational item 233 comprises the third file and the corresponding label D; and the relational item 234 comprises the fourth file and the corresponding label A and D. As mentioned above, the label A, B, C and D are simply used as demonstrations for the file name in the file directory. However, the first file, the second file, the third file and the fourth file above-mentioned that may be useful in the present invention include, but are not limited to, the labels corresponding to each file can be more than the label A, B, C and D, and the number of files can be more than 4. After introducing the primitive type database of searching files, in the following Fig. 3A will illustrate an presentation of search file interface.

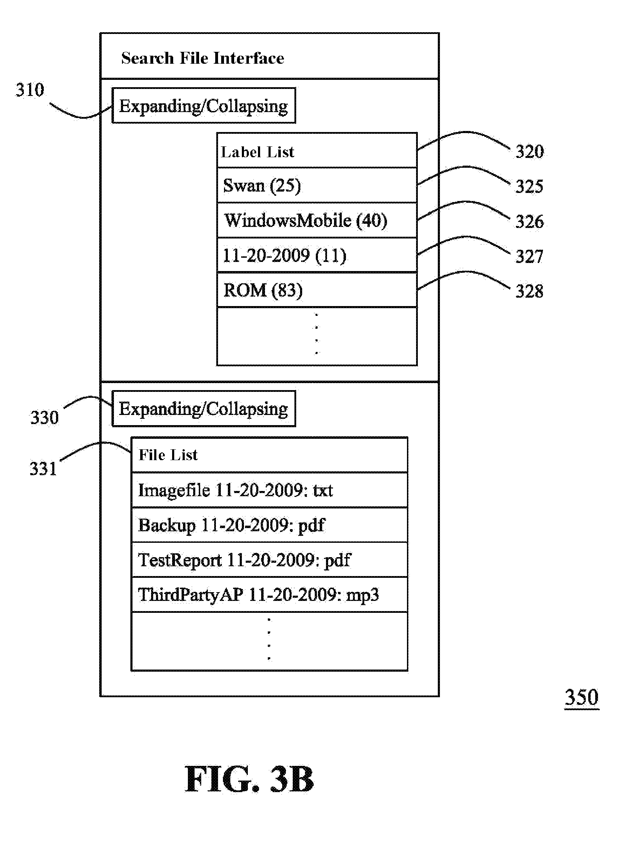

Fig. 3A is a schematic diagram of an exemplary embodiment of the search file interface 300 according to the present invention. When the software program of searching file is launched or switched to the search file interface 300 by a user, the search file interface 300 can display the condition as shown in Fig. 3. The label list 320 comprises displaying each file and the amount of the corresponding files. For example, the label item 321 displays the label A has 25 corresponding files; the label B has 40 corresponding files; the label C has 11 corresponding files; and the label D has 83 corresponding files. Furthermore, the search file interface 300 also provides a function of expanding or collapsing label list 310 (or displaying a button on the screen of displayer 130) to let the user collapse or expand the label list 320.The search file interface 300 display each file in the file list 331, as shown in Fig. 3A, the file list 331 comprises displaying the first file, the second file, the third file and the fourth file. Furthermore, the file display interface 300 also provides a function of expanding or collapsing file list 330 (or displaying a button on the screen of displayer 130) to let the user collapse the file list 331. The first file, the second file, the third file and the fourth file are simply used as demonstrations, and the label A, B, C and D are also used as demonstrations. In the following Fig. 3B will illustrate another presentation of the search file interface.

Fig. 3B is a schematic diagram of an exemplary embodiment of the search file interface 350 according to the present invention. Still referring to Fig. 3B, the label list 320 of search file interface 350 comprises displaying each label and the amount of the corresponding files. For example, the label item 325 displays the label "Swan" has 25 corresponding files; the label "WindowsMobile" has 24 corresponding files, the label "11-20-2009" has 11 corresponding files; and the label "ROM" has 83 corresponding files. The search file interface 350 displays each file in the file list, as shown in Fig. 3B, the file list 331 comprises displaying the names of 4 files, and one of individual file attribute of each file. For example, the label list 331 comprises displaying the file of "Imagefile 11-20-2009" and it's filename extension "txt"; the file of "backup 11-20-2009" and it's filename extension "pdf"; the file of "TestReport11-20-2009" and it's filename extension "ppt", and the file of "ThirdPartyAP11-20-2009" and it's filename extension "mp3". Each label and file name are presented in Chinese herein, the examples above-mentioned including, but not limited to, they can also be presented with other language like in English. Furthermore, the file list 31 can also customize to adjust the method of presentation according to the user's operation habits and user needs. Moreover, the file attribute which presented in the file list 331 can be the attribute of another files, for example, the latest updated date of file or the occupied memory space of file.

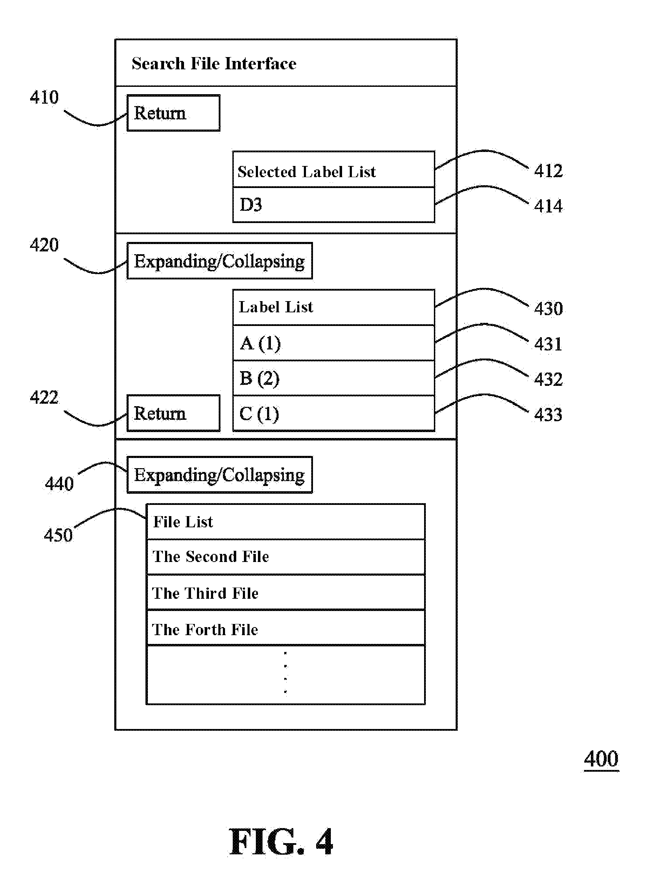

In this exemplary embodiment, after receiving a label select command to select a label, the data display module 123 display a selected label list on the displayer 130. The selected label list will display one or a plurality of selected labels sequentially, and the amount of file corresponding to all files displayed nowadays for each selected label. Further, after receiving a label select command to select a label, the data display module 123 will remove one or multiple labels in the selected label list from the updated label list. Then, when the updated label list doesn't have any label, the command input command 110 doesn't receive any label select command. In the following Fig. 4 will illustrate the method of presentation of the search file interface after selecting a label.

Fig. 4 is a schematic diagram of an exemplary embodiment of the search file interface 400 according to the present invention. The search file interface 400 is obtained from the search file interface 300 or the search file interface 350 after the user selecting a label. For example, please refer to Fig.4 to hypothesize that the user selects label D in the search file interface 300 or the search file interface 350. When the data display module 123 displaying each file (as the second, the third and the fourth file shown in the file list 450) with selected label (that is label D)and the updated label list (as shown in Fig.4 the label list 430 displays label items 431, 432 and 433) on the displayer 130, the data display module 123 also provides a function of expanding or collapsing label list 420 to let the user can collapse or expand an updated label list. In the meanwhile, the label list 430 only displays other labels corresponding to all files which includes label D (that is, each folder name of each file directory of each file except label D). For example, the label list 431 displays the label A with 1 corresponding file; the label list 432 displays the label B with 2 corresponding files and the label list 433 displays the label C with 1 corresponding file. Because the label D is the selected label, the file corresponding to label D will be filtered and don't display on the search file interface 400. Meanwhile, the files corresponding to each label will be updated and displayed according to all files presented in the file list 450.

Furthermore, the data display module 123 also provides a function 440 of expanding or collapsing the file list 450 to let the user collapse or expand the file list 450, and the file list 450 presents all files displayed nowadays. Furthermore, when the data display module 123 displaying each file with selected label and the updated label list on the displayer 130, the data display module 123 also provides a function 420 of returning to the previous layer of label list to let the user's operation returning to the label list before receiving the label select command (that is the label list 320 shown in Fig. 3A). Furthermore, the data display module 123 also provides a function 410 of returning to the selected label list to let the user's operation returning to the selected label list before receiving the label list command (in this exemplary embodiment , it still returns to the label list 320 shown in Fig. 3, or the selected label list don't be displayed, because the selected label doesn't exist before receiving the select command).

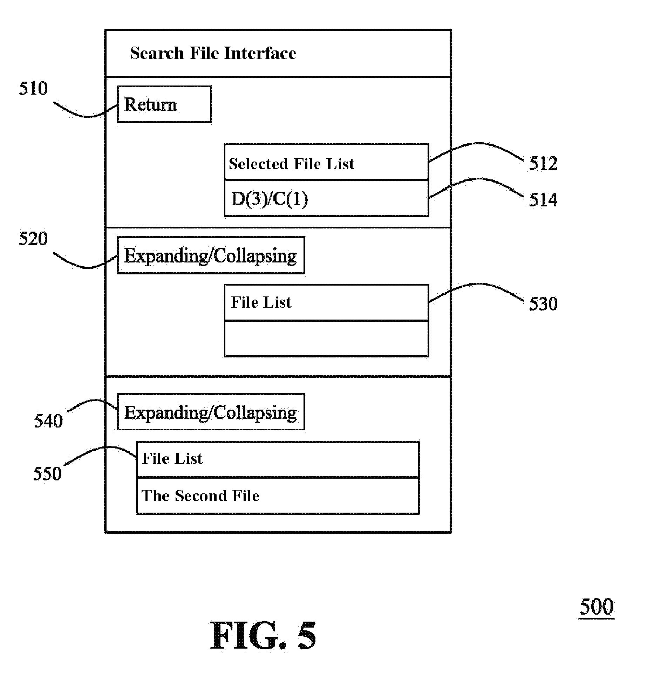

Fig. 5 is another schematic diagram of an exemplary embodiment of a search file interface 500 according to the present invention. In fact, the search file interface 500 is obtained by updating the search file interface 400 after operating. For example, referring to the Fig. 5, to pretend the user selects label C in the search file interface 400, then the search file interface 500 present the condition of the selected label list, the label list and the file list after updating. When the data display module 123 displaying each file (ex: the second file shown in the file list 550) with the selected label (label D and C) and the updated label list (that is, the empty set or the empty list displayed by the label list 530 shown in Fig. 5) on the displayer 130, the data display module 123 also provides a function 520 of expanding or collapsing the label list to let the user can collapse or expand the updated label list. In the meanwhile, there are no labels in the label list 530. Because the label D and C are the selected labels, the files without corresponding to the label D and C will be filtered, and will not be displayed on the search file interface 500.

Furthermore, the data display module 123 also provides a function 540 of expanding or collapsing the file list 550 to let the user can collapse or expand the file list 550, and the file list 550 presents all files displayed nowadays. Furthermore, when the data display module 123 displaying all files with the selected label and the updated label list on the displayer 130, the data display module 123 also provides a function 420 of returning to the previous label list to let the user's operation returning to the label list (that is, the label list 320 shown in Fig. 3A) which is before receiving the label select command. Furthermore, the data display module 123 also provides a function 510 of returning to the selected label list to let the user's operation returning to the updated label list which is before receiving the label select command. (that is, returning to the selected label list 412 shown in Fig. 4 in this exemplary embodiment)

Except receiving the label select command, the command input module 100 also receives a file select command, and displays a current file directory of a file corresponding to the file select command through the data display module 123. Probably, the command input module 110 receives a file select command, and displays one or a plurality of files corresponding to the file select command through the data display module 123. (the method of displaying multiple files will further be illustrated by Fig. 6) In general, after receiving file select command, the data display module 123 displays multiple files corresponding to the file select command as a condition of which the files have the same file name, so the user need to further select the expected file from the multiple files. In the following, Fig. 6 will be used to illustrate the condition of the data display module 123 displaying the multi-file list display interface 600 after receiving the file select command.

Fig. 6 is a schematic diagram of an exemplary embodiment of a multi-files list display interface 600 according to the present invention. Referring to the Fig. 6, to pretend the user selects file X, herein the X is a code used to indicate, and the data display module 123 displays the file name of file item 610 as " file X " in the multi-file list display interface 600. In addition, the file list 612 of the multi-file list display interface 600 lists various files whose file name corresponding to the file X in, for example, the file list item 614 displays the filename extension of the first file X as "txt"; the file list item 616 displays the filename extension of the second file X as "ppt"; and the file list item 618 displays the filename extension of the third file X as "mp3". Then the user can select a file to open to confirm whether it is the expected file for search from the listed multiple files X. However, the intention is not limited to the above-mentioned, in another exemplary embodiment, if the file list 550 of the search file interface 500 displays the file name and the filename extension of each file at the same time, then the file list 612 of the multi-file list display interface 600 can also comprise other file attributes, for example, the latest updated date of file, file type or the memory space occupied by the file to further distinguish the file with the same file name or filename extension. Furthermore, in another exemplary embodiment of the present invention, the multi-file list display interface 600 can also comprise the selected label list 412 and the label list 430 similar to the shown in Fig. 4. to let the user can further narrow their search field by selecting the labels again.

Referring to Fig. 1, the human-to-machine interface apparatus 100 can also transmit multiple files to the database 125 to an external computer device 150 to let the user to add, edit, delete or backup through an input/output module 140, and receives multiple files from an external computer device 150 and stores the received multiple files data to the database 125. The external computer device 150 can be one or a plurality of computers ( for example, one or a plurality of servers of managing a data storage system), and the human-to-machine interface apparatus 100 can be coupled with the external computer 150 by Internet connections through the input/output module 140.

In this exemplary embodiment, the electronic device equipped with the human-to-machine interface apparatus 100 can further comprises a touch screen (not shown), which is coupled to an operating system 121. Moreover, in the other embodiments according to the present invention, the command input module 110 and the displayer 130 can be integrated. Furthermore, the command input module 110 can receive the user's input command from the touch screen. Furthermore, the user's input command can work by many ways, for example the pointer movement, the control of a mouse connected to an electronic device, the operation of pressing the buttons or touching the virtual buttons on the touch screen. The buttons are the physical buttons deployed on the electronic device, and the virtual buttons are the on-screen keyboard displayed on the touch screen of the electronic device. The operation method and the major elements of the human-to-machine interface apparatus 100 have been introduced and the following will continue to illustrate the method of searching files accompanying Fig. 7 to Fig. 9.

Fig. 7 is a flow diagram of an exemplary embodiment of a method of searching files 700 according to the present invention. Referring to the Fig. 7, in this exemplary embodiment, the method of searching file 700 starts with the step S702, and establishes one or a plurality of labels according to one or a plurality of folders of current file directory of each file. Continue to step S704 after step S702. In step S704, displays the label list and all files on a displayer 130 of the electronic device.

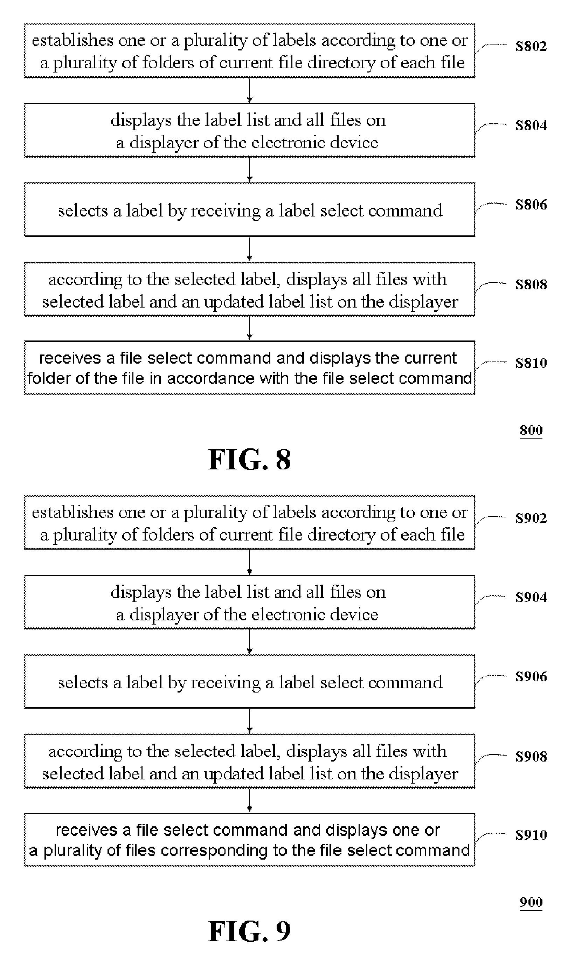

Continue to step S706 after step S704. In step S706, selects a label by receiving a label select command. Continue to step S708 after step S706. In step S708, according to the selected label, displays all files with selected label and an updated label list on the displayer. After step S708, it can continue to proceed any one of step S702 ∼ step S706, that is, it can depend on the actual user's need of searching files to repeat to proceed step S702 ∼ step S708. In the following, the other exemplary embodiment of method of searching files will continue to be illustrated .accompanying Fig. 8.

Fig. 8 is a flow diagram of an exemplary embodiment of a method of searching files 800 according to the present invention. In this exemplary embodiment, the main difference between the method of searching files 800 and the method of searching file 700 is that the method of searching files 800 will further receive a file select command and display the current folder of the file according to the file select command to let the user confirm if the found file is in accordance with the expected file. Referring to Fig. 8, in this exemplary embodiment, the steps from step S802 to step S808 of the method of searching files 800 are approximately similar to the steps from step S702 to step S708 of the method of searching files 700, therefore, the details will not repeat to illustrate. Continue to step S808 after step S810. In step 810, receives a file select command and displays the current folder of the file in accordance with the file select command. That is, list all files in this folder and specially mark the selected file or emphasize the selected file. After step S810, it can continue to proceed any one of step S802 ∼ step S808, that is, it can depend on the actual user's need of searching files to repeat to proceed step S802 ∼ step S810. However, the present invention is not limited to the above-mentioned, in the following, the other exemplary embodiment of method of searching files will continue to be illustrated .accompanying Fig. 9.

Fig. 9 is a flow diagram of an exemplary embodiment of a method of searching files 900 according to the present invention. In this exemplary embodiment, the main difference between the method of searching files 900 and the method of searching files 700 is that the method of searching files 900 further receives a file select command and displays one or a plurality of files corresponding to the file select command according to this file select command. Especially when the selected file has multiple files with same file name, it needs to let the user further confirm whether the found file is in accordance with the expected file. Referring to Fig. 9, in this exemplary embodiment, the steps from step S902 to the step S908 of the method of searching files 900 are approximately similar to the steps from step S702 to step S708 of the method of searching files 700, therefore, the details will not repeat to illustrate. Continue to step S910 after the step S908. In the step S910, receives a file select command and displays one or a plurality of files corresponding to the file select command. That is, using the multi-file list display interface 600 as shown in Fig. 6 list all the files of matching the select requirements, and let the user further narrow his search field to find the expected file. It can continue to proceed the any step of step S902 ∼ step S908 after step S910, that is, it can depend on the actual user's need of searching files to repeat to proceed step S902 ∼ step S910.

To sum up, according to the exemplary embodiment of this invention, the invention provides a method and a human-to-machine interface apparatus of searching files to solve the problem of searching files from a large number of files or the problem of searching files in a complex file storage system. The user can label a file according to the folder of current file directory of each file. Furthermore, by displaying the total number of the files corresponding to each label of the label database and the user's select command, it can quickly narrow the file search field gradually. Accordingly, the user can search files from a large number of files more intuitively, and find out the expected file quickly and efficiently.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A method of searching files applied to an electronic device, comprising the following steps:
creating one or a plurality of labels according to one or a plurality of folders of current file directory of each file;
displaying a label list and all files on a displayer of the electronic device, wherein the label list including all labels and an amount of all files corresponding to the current label list;
receiving a label select command to select a label; and
displaying all files corresponding to the selected label and an updated label list on the displayer according to the selected label, wherein the updated label list including the labels of all files displayed nowadays and an amount of all files, corresponding to each label.

2. The method of searching files as claimed in claim 1, further comprising:
storing the files in a database, wherein each label represents a folder; and
receiving a file select command and displaying a current folder of a file corresponding to the file select command.

3. The method of searching file as claimed in claim 1, further comprising:
storing the files in a database, wherein each label represents a folder; and
receiving a file select command and displaying one or a plurality of files corresponding to the file select command.

4. The method of searching files as claimed in claim 1, wherein after receiving a label select command to select a label, the method of searching files further comprising:
displaying a selected label list on the displayer, wherein the selected label list displays one or a plurality of the selected labels in sequence and an amount of corresponding files in all files displayed nowadays regarding each selected label; and
removing the labels from the selected label list or from a updated label list,
wherein stop accepting any label select command when there is no label in the updated label list.

5. The method of searching files as claimed in claim 1, wherein the step of displaying a label list and all files on a displayer of the electronic device, the method of searching files further comprises:
displaying a file attribute of each file, wherein the file attribute comprises a filename extension, a last updated date of the files and a occupied memory space of the files.

6. The method of searching files as claimed in claim 1, wherein the step of displaying each file with the selected label and the updated label list on the displayer, the method of searching files further comprises:
providing a function of expanding or collapsing the label lists for a user collapsing or expanding the updated label lists; and
providing a function of expanding or collapsing the file lists to let a user collapse or expand the file list, wherein the file lists shows all files displayed nowadays.

7. The method of searching files as claimed in claim 4, wherein the step of displaying each file with the selected label and the updated label list on the displayer, the method of searching files further comprises:
providing a function of returning to the previous layer of the label list to let a user's operation return to the label list before receiving the label select command; and
providing a function of returning to the selected label list to let the user's operation return to the selected label list before receiving the label ion instruction.

8. The method of searching files as claimed in claim 1, further comprising:
marking each folder of current file directory of each file as one or a plurality of labels; and
displaying all files on the displayer and sorting all files according to each file name of each file.

9. The method of searching files as claimed in claim 5, further comprising:
marking the filename extension of each file as a default file attribute; and
sorting multiple files having the same name according to the default file attribute when displaying all files on the displayer.

10. The method of searching files as claimed in claim 1, wherein the electronic device is a displayer which coupled to a data storage system.

11. The method of searching files as claimed in claim 1, wherein the electronic device selected from the group consisting of computer, multimedia player device, personal digital assistant, mobile phone, personal digital assistant mobile phone, intelligent mobile phone or portable navigation device.

12. A human-to-machine interface apparatus of searching files for deploying to an electronic device, the electronic device including a database to store a plurality of files, and the human-to-machine interface apparatus comprising:
a data creation module for creating one or a plurality of labels according to one or a plurality of folders of current file directory of each file, wherein the each label represents a folder;
a command input module for receiving a label select command to select a label;
a data search module for finding out all files with the selected label according to the selected label value; and
a data display module for displaying all the labels, and displaying a label list having an amount of all files corresponding to the current each label and all files on the displayer of the electronic device, or displaying each file corresponding to the each selected label and a updated label list on the displayer, wherein the updated label list comprises one or a plurality of labels of all files displayed at present and an amount of all files corresponding to each label.

13. The human-to-machine interface apparatus of searching files as claimed in claim 12, wherein the command input module further comprises receiving a file select command and the data display module displays a current folder of a file corresponding to the file select command.

14. The human-to-machine interface apparatus of searching files as claimed in claim 12, wherein the command input module further receives a file select command and the data display module displaying one or a plurality of files corresponding to the file select command.

15. The human-to-machine interface apparatus of searching files as claimed in claim 12, wherein
the data display module displays a selected label list on the displayer after selecting a label list by receiving a label select command, wherein the selected label list displays one or a plurality of selected labels and the amount of all files corresponding to the each selected label in displayed files sequentially;
removing one or a plurality of the selected labels from a updated label list; and stopping accepting any label select command when there is no labels in the updated label lists.

16. The human-to-machine interface apparatus of searching files as claimed in claim 12, wherein the data display module further displays the file attribute of each file, wherein the file attribute comprises a filename extension, a last updated date of the files and a the memory space occupied by the files.

17. The human-to-machine interface apparatus of searching files as claimed in claim 12, wherein when the data display module displays each has been selected label of each file and the updated label list on the displayer, further providing a function of expanding or collapsing the label list to let a user collapsing or expanding the file list, wherein the file lists showing all files displayed nowadays.

18. The human-to-machine interface apparatus of searching files as claimed in claim 15, wherein when the data display module displays each file with the selected label and the updated label list on the displayer, the data display module further provides a function of returning to the previous layer of the label list to let a user's operation returning to the label list before receiving the label select command; and provides a function of returning to the selected label list to let a user to return to the selected label list which before receiving the label select command.

19. The human-to-machine interface apparatus of searching files as claimed in claim 11, wherein
the data creation module marks each folder of current file directory of each file as one or a plurality of labels; and
sorting all files according to each file name of each file when the data display module displaying all files on the displayer.

20. The human-to-machine interface apparatus of searching files as claimed in claim 16, wherein
the data creation module marks the filename extension of each file as a default file attribute; and
sorting multiple files having the same name according to the file attribute when the data creation module displaying all files on the displayer.

21. The human-to-machine interface apparatus of searching files as claimed in claim 12, wherein the electronic device is a displayer coupled to a data storage system.

22. The human-to-machine interface apparatus of searching files as claimed in claim 11, wherein the electronic device comprising computer, multimedia player device, personal digital assistant, mobile phone, personal digital assistant mobile phone, intelligent mobile phone or portable navigation device.
